(19) Europäisches Patentamt
European Patent Office
Office européen des brevets

(11) EP 1 847 580 B1

(12) # EUROPEAN PATENT SPECIFICATION

(45) Date of publication and mention of the grant of the patent:
**26.08.2009 Bulletin 2009/35**

(21) Application number: **06712064.2**

(22) Date of filing: **20.01.2006**

(51) Int Cl.:
***C09J 133/00*** *(2006.01)* ***G02B 1/11*** *(2006.01)*
***G02B 1/10*** *(2006.01)* ***G02B 5/22*** *(2006.01)*

(86) International application number:
**PCT/JP2006/300839**

(87) International publication number:
**WO 2006/077960 (27.07.2006 Gazette 2006/30)**

(54) **PRESSURE-SENSITIVE ADHESIVE COMPOSITION AND OPTICAL FILTER**

HAFTKLEBEMITTEL UND OPTISCHER FILTER

COMPOSITION D'ADHÉSIF AUTOCOLLANT ET FILTRE OPTIQUE

(84) Designated Contracting States:
**AT BE BG CH CY CZ DE DK EE ES FI FR GB GR HU IE IS IT LI LT LU LV MC NL PL PT RO SE SI SK TR**

(30) Priority: **21.01.2005 JP 2005013717**

(43) Date of publication of application:
**24.10.2007 Bulletin 2007/43**

(73) Proprietor: **Asahi Glass Company, Limited**
**Chiyoda-ku, Tokyo 100-8405 (JP)**

(72) Inventor: **MIYAKO, Takeomi**
**Ichihara-shi, Chiba, 2908566 (JP)**

(74) Representative: **Müller-Boré & Partner**
**Patentanwälte**
**Grafinger Strasse 2**
**81671 München (DE)**

(56) References cited:
**JP-A- 2001 228 323**
**JP-A- 2002 116 700**
**JP-A- 2002 258 760**
**JP-A- 2002 323 860**
**JP-A- 2004 140 283**
**JP-A- 2004 182 936**
**JP-A- 2004 281 839**
**JP-A- 2004 302 177**
**JP-A- 2005 272 660**
**JP-A- 2006 054 291**
**US-A1- 2003 124 436**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 847 580 B1

## Description

TECHNICAL FIELD

The present invention relates to an adhesive composition to bond a copper mesh to an adherend. Further, it relates to an optical filter to be used for an image display apparatus particularly a plasma display panel (hereinafter referred to as a "PDP").

BACKGROUND ART

Heretofore, for a PDP, a filter to be disposed in front of the PDP has been required for the purpose of shielding electromagnetic waves, infrared waves, etc. emitted from the PDP, of preventing reflection of outer light, of converting colors of the PDP to a desired color, etc. This optical filter is usually one comprising a transparent substrate of e.g. glass, and an infrared absorbing film, an electroconductive film for shielding electromagnetic waves, an antireflection film, etc. laminated on both sides of the transparent substrate.

As the electroconductive film for shielding electromagnetic waves, for example, a metal mesh has been used, particularly a copper mesh having a network pattern formed on a copper foil has been widely used. To bond such a copper mesh to an adherend such as a transparent substrate, an antireflection film or an infrared absorbing film, an adhesive is used, and usually a coloring dye is added to the adhesive to correct the color tone (for example, Patent Document 1).

Patent Document 1: JP-A-2003-283182

DISCLOSURE OF THE INVENTION

OBJECTS TO BE ACCOMPLISHED BY THE INVENTION

However, an optical filter comprising a copper mesh bonded to an adherend by means of a conventional adhesive containing a coloring dye, is insufficient in moisture resistance, and the adhesive may be colored green after the moisture resistance test, or the dye may deteriorate to cause color degradation in some cases.

Under these circumstances, it is an object of the present invention to provide an adhesive composition which is prevented from change in color and color degradation after the moisture resistance test in a state where a copper mesh is bonded.

Further, another object of the present invention is to provide an optical filter using the above adhesive composition, which is excellent in moisture resistance, and is prevented from change in color and color degradation.

MEANS TO ACCOMPLISH THE OBJECTS

The adhesive composition of the present invention is an adhesive composition for bonding a copper mesh to an adherend, comprising an acrylic adhesive having an acid value of at most 7 mgKOH/g and a dye containing no hydroxyl group nor amino group.

In the adhesive composition of the present invention, the dye is preferably at least one dye selected from the group consisting of an anthraquinone dye and a porphyrin dye.

The optical filter of the present invention has a copper mesh bonded to an adherend by means of the above-described adhesive composition.

EFFECTS OF THE INVENTION

The adhesive composition of the present invention is prevented from change in color and color degradation after the moisture resistance test in a state where a copper mesh is bonded to an adherend.

Further, the optical filter of the present invention is excellent in moisture resistance and is prevented from change in color and color degradation.

BRIEF DESCRIPTION OF THE DRAWING

Fig. 1 is a cross-section illustrating one embodiment of an optical filter of the present invention.

MEANINGS OF SYMBOLS

10: Optical filter
11: Antireflection film (adherend)
12: Copper mesh
13: Transparent substrate
14: First adhesive (adhesive composition)
15: Second adhesive

BEST MODE FOR CARRYING OUT THE INVENTION

(ADHESIVE COMPOSITION)

The adhesive composition of the present invention is to bond a copper mesh to an adherend, and contains an acrylic adhesive and a dye.

(Acrylic Adhesive)

An acrylic adhesive is a polymer containing acrylic monomer units as the main component. Such an acrylic monomer may, for example, be (meth)acrylic acid, itaconic acid, maleic acid (anhydride), fumaric acid (anhydride), crotonic acid or an alkyl ester thereof. The "(meth)acrylic acid" means acrylic acid and methacrylic acid. A "(meth)acrylate" also means an acrylate and a methacrylate.

Among the acrylic monomers, (meth)acrylic acid or its alkyl ester is preferably contained as the main component. Here, the main component means that (meth)acrylic acid or its alkyl ester is contained in an amount of at least 95 mass%, more preferably at least 98 mass%, furthermore preferably at least 99 mass% based on the total amount of the acrylic adhesive. The alkyl ester of (meth)acrylic acid may, for example, be methyl (meth)acrylate, ethyl (meth)acrylate, propyl (meth)acrylate, n-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, isononyl (meth)acrylate, n-decyl (meth)acrylate or isodecyl (meth)acrylate.

Further, in order to increase the adhesive force of the adhesive, preferred is use of a monomer having a functional group (such as a hydroxyl group or a glycidyl group) capable of being a crosslinking site. The monomer having a functional group capable of being a crosslinking site may, for example, be hydroxyethyl acrylate, hydroxyethyl methacrylate, glycidyl acrylate or glycidyl methacrylate.

Further, in a case where such a monomer having a crosslinking site is used, a crosslinking agent is preferably added. The adhesive force can be secured by crosslinking a polymer by making the crosslinking agent react with the crosslinking site. The crosslinking agent may, for example, be a melamine resin, a urea resin, an epoxy resin, a metal oxide, a metal salt, a metal hydroxide, a metal chelate, a polyisocyanate, a carboxyl group-containing polymer, an acid anhydride or a polyamine, and is properly selected depending upon the type of the functional group capable of being a crosslinking site.

Further, the acrylic adhesive has an acid value of at most 7 mgKOH/g. The acid value may be 0 mgKOH/g. The acid value is preferably from 0 to 4 mgKOH/g. By the acrylic adhesive having an acid value of at most 7 mgKOH/g, the change in color after the moisture resistance test can be suppressed. The acid value here means a value determined by titration with alcoholic potassium hydroxide (KOH) using phenolphthalein as an indicator.

In order that the acrylic adhesive has an acid value of at most 7 mgKOH/g, the amount of acrylic acid copolymerized is adjusted when an acrylic monomer is polymerized so that the acid value is within the above range. Acrylic adhesives having an acid value of at most 7 mgKOH/g are commercially available, and proper one is selected therefrom.

The acrylic adhesive of the present invention has a glass transition point (Tg) of preferably from -40 to 40°C, more preferably from -30 to 10°C.

(Dye)

As a dye, a dye containing no hydroxyl group (-OH) nor amino group ($-NH_2$) is used. The adhesive composition of the present invention preferably contains, as a dye, substantially only a dye containing no hydroxyl group (-OH) nor amino group ($-NH_2$). "Containing substantially only a dye containing no hydroxyl group nor amino group" means that the dye containing no hydroxyl group nor amino group is contained in an amount of at least 95 mass%, more preferably at least 98 mass%, furthermore preferably at least 99 mass% based on the total amount of the dyes in the adhesive composition of the present invention.

Among dyes, it is preferred to use at least one dye selected from the group consisting of an anthraquinone dye and a porphyrin dye so as to further suppress change in color and color degradation.

The anthraquinone dye may, for example, be preferably compounds represented by the formulae (1) and (2):

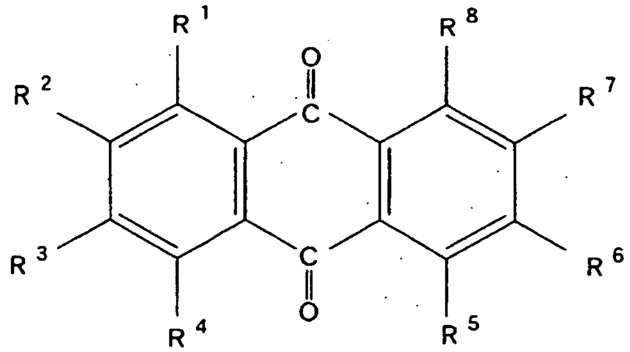

· · · (1)

wherein each of $R^1$ to $R^8$ which are independent of one another, is a hydrogen atom, a chlorine atom, a fluorine atom, a bromine atom, a cyano group, a benzyl group, a $C_{1-12}$ alkyl group (provided that the hydrogen atom in the alkyl group may be substituted by a fluorine atom or a chlorine atom), a phenyl group (provided that the hydrogen atom in the phenyl group may be substituted by a fluorine atom or a chlorine atom), a $C_{1-12}$ alkoxyl group (provided that the hydrogen atom may be substituted by a fluorine atom or a chlorine atom), -CO-$R^a$ (wherein $R^a$ is a $C_{1-8}$ alkyl group, a phenyl group, a benzyl group, a cyclohexyl group, a cyclohexylmethyl group, a 1-naphthyl group or a 2-naphthyl group), -S-$R^b$ (wherein $R^b$ is a $C_{1-8}$ alkyl group, a phenyl group, a benzyl group, a cyclohexyl group, a cyclohexylmethyl group, a 1-naphthyl group or a 2-naphthyl group), or -NH-Ph (wherein Ph is a phenyl group, and the hydrogen atom in the phenyl group may be substituted by a $C_{1-10}$ alkyl group or a $C_{1-10}$ alkoxyl group);

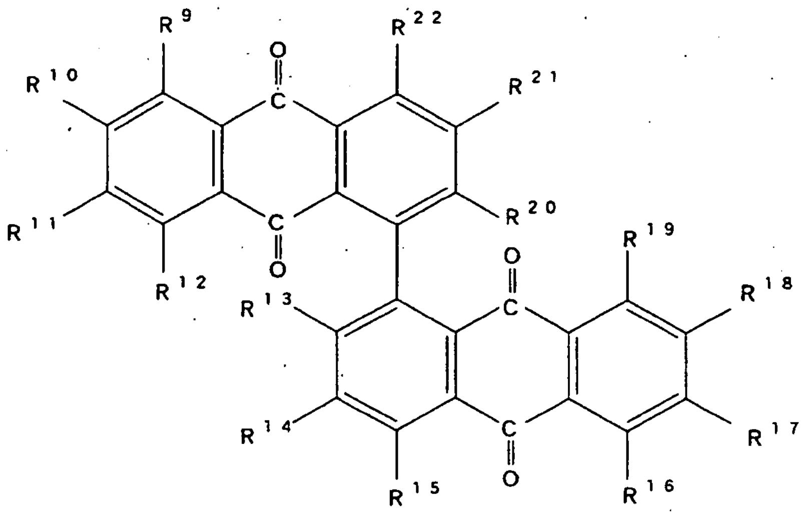

· · · (2)

wherein each of $R^9$ to $R^{22}$ which are independent of one another, is a hydrogen atom, a chlorine atom, a fluorine atom, a bromine atom, a cyano group, a benzyl group, a $C_{1-12}$ alkyl group (provided that the hydrogen atom in the alkyl group may be substituted by a fluorine atom or a chlorine atom), a phenyl group (provided that the hydrogen atom in the phenyl group may be substituted by a fluorine atom or a chlorine atom), a $C_{1-12}$ alkoxyl group (provided that the hydrogen atom in the alkoxyl group may be substituted by a fluorine atom, a bromine atom or a chlorine atom), -CO-$R^c$ (wherein $R^c$ is a $C_{1-8}$ alkyl group, a phenyl group, a benzyl group, a cyclohexyl group, a cyclohexylmethyl group, a 1-naphthyl group or a 2-naphthyl group), -S-$R^d$ (wherein $R^d$ is a $C_{1-8}$ alkyl group, a phenyl group, a benzyl group, a cyclohexyl group, a cyclohexylmethyl group, a 1-naphthyl group or a 2-naphthyl group), or -NH-Ph (wherein Ph is a phenyl group, and the hydrogen atom in the phenyl group may be substituted by a $C_{1-10}$ alkyl group or a $C_{1-10}$ alkoxyl group).

Further, the porphyrin dye preferably has a structure represented by the formula (3):

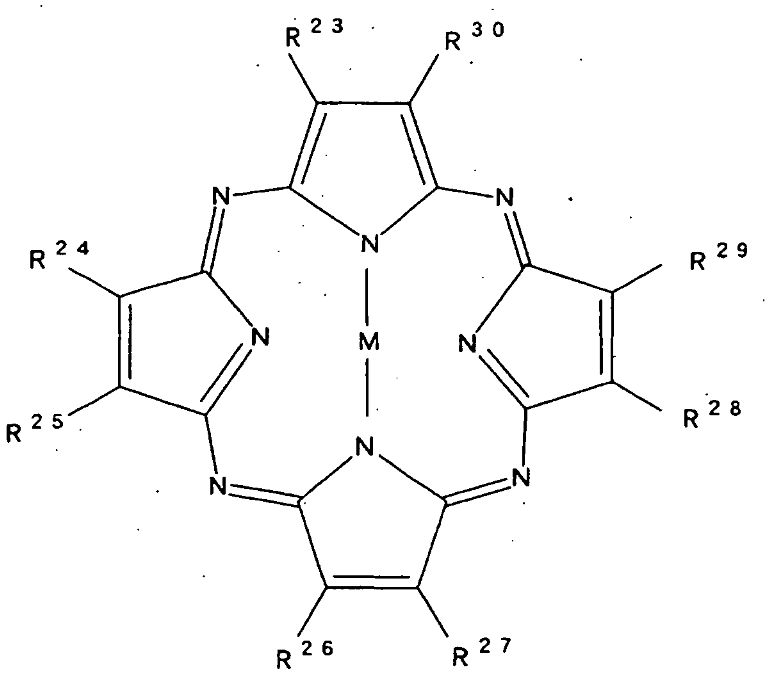

· · · (3)

wherein each of $R^{23}$ to $R^{30}$ which are independent of one another, is a hydrogen atom, a chlorine atom, a fluorine atom, a bromine atom, a cyano group, a benzyl group (provided that the hydrogen atom in the benzyl group may be substituted by a fluorine atom, a bromine atom or a chlorine atom), a phenyl group (provided that the hydrogen atom in the phenyl group may be substituted by a fluorine atom, a bromine atom or a chlorine atom), a $C_{1-10}$ alkyl group (provided that the hydrogen atom in the alkyl group may be substituted by a fluorine atom, a bromine atom or a chlorine atom), or a $C_{1-10}$ alkoxyl group (provided that the hydrogen atom in the alkoxyl group may be substituted by a fluorine atom or a chlorine atom), and M is Cu, Ni, Zn, Pd, Pt, VO, Co or Mg.

The anthraquinone dye represented by the formula (1) containing no hydroxyl group nor amino group may, for example, be "Kayaset Violet A-R", "Kayaset Blue N", "Kayaset Blue FR" or "Kayaset Green A-B", tradename, manufactured by Nippon Kayaku Co., Ltd. Further, the porphyrin dye represented by the formula (3) containing no hydroxyl group nor amino group may, for example, be "TAP-2", tradename, manufactured by YAMADA CHEMICAL CO., LTD.

Further, in the present invention, as the dye containing no hydroxyl group (-OH) nor amino group ($-NH_2$), a dye other than the anthraquinone dye and the porphyrin dye, such as a cyanine dye, a phthalocyanine dye or an immonium dye may be contained, but in order to sufficiently prevent color degradation and change in color, the amount of the dye other than the anthraquinone dye and the porphyrin dye is small, and more preferably only an anthraquinone dye or a porphyrin dye is used.

The adhesive composition may contain another component in addition to the acrylic adhesive and the dye. Such another component may, for example, be an ultraviolet absorber, an ultraviolet stabilizer, a photostabilizer or a thermal stabilizer.

The above-described adhesive composition contains an acrylic adhesive and a dye, wherein the acrylic adhesive has an acid value of at most 7 mgKOH/g and the dye contains no hydroxyl group nor amino group. Thus, it is prevented from change in color and color degradation after the moisture resistance test in a state where a copper mesh is bonded. The reason is not clearly understood but is considered to be because an acrylic adhesive having an acid value of at most 7 mgKOH/g and a dye containing no hydroxyl group nor amino group hardly form a chelate with copper ions.

(OPTICAL FILTER)

Now, an embodiment of the optical filter of the present invention will be described.

Fig. 1 is a cross-section illustrating an optical filter according to the present embodiment. The optical filter 10 according to the present embodiment comprises an antireflection film 11 as an adherend, a copper mesh 12 and a transparent substrate 13, wherein the antireflection film 11 and the copper mesh 12 are bonded by means of a first adhesive 14 and the copper mesh 12 and the transparent substrate 13 are bonded by means of a second adhesive 15.

The first adhesive 14 in the optical filter 10 is the above-described adhesive composition of the present invention.

The antireflection film 11 has antireflection properties and may, for example, be one having a layer having antiglare treatment applied thereto or a low refractive layer. A preferred structure of the antireflection film 11 is a structure having a low refractive layer on one side of a resin film. The reason as to why this structure is preferred is that in the event that the transparent substrate 13 constituting the optical filter 10 is broken, flying of fragments can be prevented. The low refractive layer may, for example, be a layer made of a resin having a low refractive index or a layer made of an inorganic compound having a low refractive index. The resin having a low refractive index may, for example, be a fluororesin, a silicone resin or a fluorosilicone resin. The inorganic compound having a low refractive index may, for example, be silicon dioxide. Particularly preferred is an antireflection layer having a low refractive layer made of an amorphous fluoropolymer on one side of a polyurethane flexible resin, and specifically, Arctop (tradename) manufactured by Asahi Glass Company, Limited may, for example, be mentioned. The low refractive index is specifically a refractive index of preferably from 1.1 to 1.6, more preferably from 1.2 to 1.5, furthermore preferably from 1.3 to 1.48.

The copper mesh 12 is one having a copper thin film etched into a pattern by known photolithography to form a mesh pattern. The copper mesh 12 has a high electrical conductivity and thereby functions as an electromagnetic wave shielding layer. That is, it can shield electromagnetic waves emitted from a PDP main body. In the mesh pattern of the copper mesh 12, the open area ratio is preferably from about 60 to about 90% so as to secure light transparency. As preferred dimensions of the mesh, the mesh width is from 6 to 30 μm, the mesh pitch is from 100 to 500 μm and the mesh thickness is from 6 to 25 μm.

The transparent substrate 13 is a substrate having high rigidity while having transparency. A material constituting the transparent substrate 13 may, for example, be glass or a resin. Specifically, the resin may, for example, be a polyester such as polyethylene terephthalate (PET) or polybutylene terephthalate; a polyacrylate such as polymethyl methacrylate (PMMA); a polycarbonate (PC); a polystyrene; a triacetate; a polyvinyl alcohol; a polyvinyl alcohol; a polyvinyl chloride; a polyvinylidene chloride; a polyethylene; an ethylene/vinyl acetate copolymer; a polyvinyl butyral; a metal ion-crosslinked ethylene methacrylic acid copolymer; a polyurethane; or a cellophane. Among the above materials, preferred is glass, PET, PC or PMMA.

The second adhesive 15 is not particularly limited so long as it is a transparent adhesive. For example, it may, for example, be an ethylene/vinyl acetate copolymer type, acrylic ester copolymer type, polyvinyl chloride type, epoxy resin type, polyurethane type, vinyl acetate copolymer type, styrene/acrylic resin type, polyester type, polyamide type, polyolefin type, ethylene/vinyl acetate copolymer type, natural rubber type, styrene/butadiene rubber type, butyl rubber type, regenerated rubber type or silicone rubber type adhesive. Further, as the second adhesive 15, the adhesive composition of the present invention may be used, or the adhesive composition of the present invention excluding the dye may also be used. A preferred second adhesive is the adhesive composition of the present invention or the adhesive composition of the present invention excluding the dye.

This optical filter 10 may have an infrared absorbing film laminated thereon.

The infrared absorbing film absorbs near infrared rays emitted from a PDP main body. The infrared absorbing film preferably comprises a transparent. synthetic resin layer containing a dye having near infrared absorbing properties. Such a dye may be either a stain or a pigment. The "dye having near infrared absorbing properties (hereinafter referred to as a near infrared absorber)" may be any dye at least capable of absorbing part of light in the near infrared range (wavelength of from 780 to 1300 nm) and may be a dye having absorption properties in another wavelength range, e.g. visible light.

Further, the transparent resin layer containing such a near infrared absorber may contain a dye having color tone correction proeprties (hereinafter referred to as a color tone correcting agent). The color tone correcting agent is a dye capable of specifically absorbing light in the visible wavelength range (wavelength of from 380 to 780 nm), preferably light in a specific wavelength range(s). The synthetic resin as a base in which the near infrared absorber and the color tone correcting agent are incorporated is not particularly limited, and various transparent thermoplastic synthetic resins and thermosetting synthetic resins may be used.

The thickness of the infrared absorbing film is not particularly limited but is preferably from about 0.5 to about 25 μm.

The near infrared absorber may, for example, be a polymethine type, phthalocyanine type, naphthalocyanine type, metal complex type, aminium type, immonium type, diimmonium type, anthraquinone type, dithiol metal complex type, naphthoquinone type, indolphenol type, azo type or triallylmethane type compound. For heat absorption and prevention of noises from electronic equipment, preferred is a near infrared absorber having a maximum absorption wavelength of from 750 to 1100 nm, and particularly preferred is a metal complex type, aminium type, phthalocyanine type, naphthalocyanine type or diimmonium type compound. The near infrared absorbers may be used alone or as a mixture of two or more of them.

The color tone correcting agent is to absorb part of the visible light in a specific wavelength range to improve color tone of the transmitted visible light. The color tone correcting agent may, for example, be a known organic pigment and organic stain such as an azo type, condensed azo type, diimonium type, phthalocyanine type, anthraquinone type,

indigo type, perinone type, perylene type, dioxazine type, quinacridone type, methine type, isoindolinone type, quinophthalon type, pyrrol type, thioindigo type or metal complex type compound, or an inorganic pigment.

Among the color tone correcting agents, it is preferred to combine one or more among dyes having good weather resistance and having good miscibility with or dispersibility in the base compound of the infrared absorbing film, such as diimonium type, phthalocyanine type and anthraquinone type dyes in combination.

As a method to produce the above optical filter 10, a first adhesive 14 is applied on an antireflection film 11. A copper mesh 12 is bonded to a transparent substrate 13 by means of a second adhesive 15. Then, the first adhesive 14 applied to the antireflection film 11 and the copper mesh 12 bonded to the transparent substrate 13 are bonded to obtain an optical filter 10.

A method of applying the first adhesive 14 and the second adhesive 15 may, for example, be dip coating, roll coating, spray coating, gravure coating, comma coating or die coating.

In the above-described optical filter 10, the copper mesh 12 is bonded to the antireflection film 11 by means of the first adhesive 14 made of the above adhesive composition. Thus, the optical filter 10 is excellent in moisture resistance and can be prevented from change in color and color degradation.

Further, this optical filter 10 has magnetic wave shielding properties and antireflection properties and is thereby preferably used as a filter for a PDP.

The optical filter of the present invention is not limited to the above embodiment. For example, the adherend is not limited to an antireflection film, but may be another functional film such as an infrared absorbing film or a transparent substrate. Namely, the optical filter may be an optical filter having a copper mesh bonded to an infrared absorbing film or a transparent substrate by means of a first adhesive made of the above adhesive composition. The functional film is preferably a resin film having functions imparted.

The thickness of the resin film is preferably from 0.5 to 500 μm, more preferably from 10 to 400 μm. Even with such a structure, the same effects as the above embodiment will be obtained.

EXAMPLES

Now, the present invention will be described in further detail with reference to Examples. However, it should be understood that the present invention is by no means restricted to the following Examples.

In the following Examples and Comparative Examples, the acid value of an acrylic adhesive was measured as follows.

First, an acrylic adhesive sample was stirred well and mixed, and 2 g thereof was accurately weighed by a balance. Then, 20 ml of a solvent mixture of toluene/methanol (=7/3 volume ratio) was added, followed by stirring to dissolve the sample. Further, two to three drops of a phenolphthalein indicator were added, followed by stirring again, and then titration with a 0.02 mol/L alcoholic KOH was carried out, and a point where the solution remained pale pink for 15 seconds was regarded as the end point. Further, as a blank test, the above operation was conducted only with a solvent mixture without a sample.

$$\text{Acid value (mgKOH/g)} = [(V_1 - V_2) \times f \times 1.122]/S$$

$V_1$: Addition amount (ml) of alcoholic KOH in the test

$V_2$: Addition amount (ml) of alcoholic KOH in the blank test

f: Factor of alcoholic KOH

S: Weight (g) of sample

PREPARATION EXAMPLE 1

0.02 g of an anthraquinone dye ("Kayaset Violet A-R", tradename, manufactured by Nippon Kayaku Co., Ltd.) as a dye is dissolved in 7.7 g of methyl ethyl ketone, and 42.3 g of an acrylic adhesive ("NCK101", tradename, manufactured by TOYO INK MFG. CO., LTD., acid value: 0 mgKOH/g) and 0.5 g of a curing agent ("Coronate HL", tradename, manufactured by NIPPON POLYURETHANE INDUSTRY CO., LTD.) are further dissolved to prepare a first adhesive (adhesive composition). This first adhesive is applied on an antireflection film with a thickness of 300 μm ("Arctop URP2199", tradename, manufactured by Asahi Glass Company, Limited) by an applicator so that the thickness of a dry coating film is 25 μm. Then, a copper mesh (manufactured by Dai Nippon Printing Co., Ltd., 250 μm pitch) is bonded

to glass (transparent substrate) by means of, as a second adhesive, an adhesive which is the above adhesive composition having no dye added thereto, and on the surface of the bonded copper foil mesh, the above antireflection film is bonded by means of the first adhesive. Finally, treatment in an autoclave (60°C, 5 atom, 30 minutes) is applied to prepare an optical filter.

PREPARATION EXAMPLE 2

An optical filter is prepared in the same manner as in Preparation Example 1 except that the dye is changed to an anthraquinone dye ("Kayaset Blue N", tradename, manufactured by Nippon Kayaku Co., Ltd.).

PREPARATION EXAMPLE 3

An optical filter is prepared in the same manner as in Preparation Example 1 except that the dye is changed to an anthraquinone dye ("Kayaset Blue FR", tradename, manufactured by Nippon Kayaku Co., Ltd.).

PREPARATION EXAMPLE 4

An optical filter is prepared in the same manner as in Preparation Example 1 except that the dye is changed to an anthraquinone dye ("Kayaset Green A-B", tradename, manufactured by Nippon Kayaku Co., Ltd.), and that the acrylic adhesive is changed to 53.2 g of "EXK04-488", tradename, manufactured by TOYO INK MFG. CO., LTD. (acid value: 6.2 mgKOH/g).

PREPARATION EXAMPLE 5

An optical filter is prepared in the same manner as in Preparation Example 1 except that the dye is changed to a porphyrin dye ("TAP-2", tradename, manufactured by YAMADA CHEMICAL CO., LTD.).

PREPARATION EXAMPLE 6

An optical filter is prepared in the same manner as in Preparation Example 1 except that 0.02 g of a porphyrin dye ("TAP-2", tradename, manufactured by YAMADA CHEMICAL CO., LTD.) is further used as the dye.

PREPARATION EXAMPLE 7

An optical filter is prepared in the same manner as in Preparation Example 1 except that the dye is changed to an anthraquinone dye ("Kayaset Blue A-2R", tradename, manufactured by Nippon Kayaku Co., Ltd., containing a hydroxyl group).

PREPARATION EXAMPLE 8

An optical filter is prepared in the same manner as in Preparation Example 1 except that the dye is changed to an anthraquinone dye ("Kayaset Green A-G", tradename, manufactured by Nippon Kayaku Co., Ltd., containing a hydroxyl group and an amino group).

PREPARATION EXAMPLE 9

An optical filter is prepared in the same manner as in Preparation Example 1 except that the acrylic adhesive is changed to 62.6 g of "SK-DYNE 2094", tradename, manufactured by Soken Chemical & Engineering Co., Ltd. (acid value: 27.2 mgKOH/g).

PREPARATION EXAMPLE 11

0.02 g of an anthraquinone dye ("Kayaset Violet A-R", tradename, manufactured by Nippon Kayaku Co., Ltd.) as a dye was dissolved in 7.7 g of methyl ethyl ketone, and 42.3 g of an acrylic adhesive ("NCK101", tradename, manufactured by TOYO INK MFG. CO., LTD., acid value: 0 mgKOH/g, Tg: -20°C) and 0.5 g of a curing agent ("Coronate HL", tradename, manufactured by NIPPON POLYURETHANE INDUSTRY CO., LTD.) were dissolved to prepare a first adhesive (adhesive composition). An antireflection film with a thickness of 300 μm having a low refractive layer on one side of a resin film ("Arctop URP2199", tradename, manufactured by Asahi Glass Company, Limited, refractive index

of the low refractive layer: 1.34) was prepared. The above first adhesive was applied to the side opposite of the antireflection film from the low refractive layer, by an applicator so that the thickness of the dry coating film was 25 μm.

Then, a mesh film (manufactured by Dai Nippon Printing Co., Ltd.) having a copper foil mesh (mesh width: 12 μm, mesh pitch: 250 μm, mesh thickness: 12 μm) laminated on a polyethylene terephthalate film with a thickness of 100 μm by means of an adhesive was prepared. The side on which no copper foil mesh was laminated of the mesh film, and a glass substrate (transparent substrate) with a thickness of 2.5 mm, were bonded by means of a second adhesive. The second adhesive is the same adhesive as the above first adhesive except that no dye was added. To the surface on the copper foil mesh side of the glass substrate to which the mesh film was bonded, the above antireflection film was bonded by means of the first adhesive. Finally, treatment in an autoclave (60°C, 5 atom, 30 minutes) was applied to prepare an optical filter.

PREPARATION EXAMPLE 12

An optical filter was prepared in the same manner as in Preparation Example 11 except that the dye was changed to an anthraquinone dye ("Kayaset Blue N", tradename, manufactured by Nippon Kayaku Co., Ltd.).

PREPARATION EXAMPLE 13

An optical filter was prepared in the same manner as in Preparation Example 11 except that the dye was changed to an anthraquinone dye ("Kayaset Blue FR", tradename, manufactured by Nippon Kayaku Co., Ltd.).

PREPARATION EXAMPLE 14

An optical filter was prepared in the same manner as in Preparation Example 11 except that the dye was changed to an anthraquinone dye ("Kayaset Green A-B", tradename, manufactured by Nippon Kayaku Co., Ltd.), and that the acrylic adhesive was changed to 53.2 g of "EXK04-488", tradename, manufactured by TOYO INK MFG. CO., LTD. (acid value: 6.2 mgKOH/g).

PREPARATION EXAMPLE 15

An optical filter was prepared in the same manner as in Preparation Example 11 except that the dye was changed to a porphyrin dye ("TAP-2", tradename, manufactured by YAMADA CHEMICAL CO., LTD.).

PREPARATION EXAMPLE 16

An optical filter was prepared in the same manner as in Preparation Example 11 except that 0.02 g of a porphyrin dye ("TAP-2", tradename, manufactured by YAMADA CHEMICAL CO., LTD.) was further used as the dye.

PREPARATION EXAMPLE 17

An optical filter was prepared in the same manner as in Preparation Example 11 except that the dye was changed to an anthraquinone dye ("Kayaset Blue A-2R", tradename, manufactured by Nippon Kayaku Co., Ltd., containing a hydroxyl group).

PREPARATION EXAMPLE 18

An optical filter was prepared in the same manner as in Preparation Example 11 except that the dye was changed to an anthraquinone dye ("Kayaset Green A-G", tradename, manufactured by Nippon Kayaku Co., Ltd., containing a hydroxyl group and an amino group).

PREPARATION EXAMPLE 19

An optical filter was prepared in the same manner as in Preparation Example 11 except that the acrylic adhesive was changed to 62.6 g of "SK-DYNE 2094", tradename, manufactured by Soken Chemical & Engineering Co., Ltd. (acid value: 27.2 mgKOH/g).

The moisture resistance of each of the optical filters obtained in Preparation Examples 1 to 9 and 11 to 19 was evaluated as follows. Namely, each optical filter was left to stand for 500 hours in a constant temperature and constant humidity container (KCH-1000, manufactured by TOKYO RIKAKIKAI CO., LTD.) set at a temperature of 60°C and a

humidity of 95%RH. Then, a test specimen of 80 mm square was cut out from each optical filter taken out from the constant temperature and constant humidity container. The transmission spectrum of the test specimen was measured within a wavelength range of from 380 to 780 nm by a spectrophotometer (UV-3100, manufactured by Shimadzu Corporation). The maximum in the measured transmission spectrum was regarded as the maximum T (λmax) of the transmittance. Further, the chromaticity (x, y) was obtained based on JIS Z8701-1999. Each value was obtained employing the transmittance of the air in the room as a control.

Then, the differences between the maximum of the transmittance and the chromaticity of the sample preliminarily measured before the sample was left to stand for 500 hours in the constant temperature and constant humidity container, and the above measured maximum T (λmax) of the transmittance and the chromaticity (x, y) after the sample was left to stand for 500 hours in the constant temperature and constant humidity container, were obtained. The results are shown in Table 1.

Here, when both Δx and Δy which are differences in the chromaticity are less than 0.005 (absolute value), it is considered that the change in color is suppressed. Further, when ΔT (λmax) which is a difference in the maximum value is less than 3% (absolute value), it is considered that the color degradation is suppressed.

TABLE 1

| Prep. Ex. No. | Acrylic adhesive | | Dye | | | Results of moisture resistance test | | |
|---|---|---|---|---|---|---|---|---|
| | Tradename | Acid value (mgKOH/g) | Tradename | Functional group -OH | Functional group $-NH_2$ | Change in color | | Color degradation ΔT (λmax) (%) |
| | | | | | | Δx | Δy | |
| 1 | N | 0 | VA | Nil | Nil | 0.002 | 0.003 | 0.6 |
| 2 | N | 0 | BN | Nil | Nil | 0.001 | 0.002 | -1.0 |
| 3 | N | 0 | BF | Nil | Nil | 0.003 | 0.001 | -1.2 |
| 4 | E | 6.2 | GAB | Nil | Nil | 0.003 | 0.002 | 1.4 |
| 5 | N | 0 | T | Nil | Nil | 0.001 | 0.003 | 0.3 |
| 6 | N | 0 | VA+T | Nil | Nil | 0.001 | 0.002 | 0.5 |
| 7 | N | 0 | BA | Present | Nil | 0.001 | 0.006 | -0.3 |
| 8 | N | 0 | GAG | Present | Present | 0.011 | -0.002 | 15.2 |
| 9 | S | 27.2 | VA | Nil | Nil | -0.006 | 0.001 | -0.5 |
| 11 | N | 0 | VA | Nil | Nil | 0.002 | 0.003 | 0.6 |
| 12 | N | 0 | BN | Nil | Nil | 0.001 | 0.002 | -1.0 |
| 13 | N | 0 | BF | Nil | Nil | 0.003 | 0.00.1 | -1.2 |
| 14 | E | 6.2 | GAB | Nil | Nil | 0.003 | 0.002 | 1.4 |
| 15 | N | 0 | T | Nil | Nil | 0.001 | 0.003 | 0.3 |
| 16 | N | 0 | VA+T | Nil | Nil | 0.001 | 0.002 | 0.5 |
| 17 | N | 0 | BA | Present | Nil | 0.001 | 0.006 | -0.3 |
| 18 | N | 0 | GAG | Present | Present | 0.011 | -0.002 | 15.2 |
| 19 | S | 27.2 | VA | Nil | Nil | -0.006 | 0.001 | -0.5 |

Tradenames in Table 1 are as follows.

(Acrylic adhesive)

N: NCK101

E: EXK04-488

S: SK-DYNE 2094

(Dye)

VA: Kayaset Violet A-R
BN: Kayaset Blue N
BF: Kayaset Blue FR
GAB: Kayaset Green A-B
T: TAP-2
BA: Kayaset Blue A-2R
GAG: Kayaset Green A-G

The optical filters in Preparation Examples 1 to 6 and 11 to 16, having a copper mesh bonded to an antireflection film by means of an adhesive composition containing an acrylic adhesive having an acid value of at most 7 mgKOH/g, and at least one dye selected from the group consisting of an anthraquinone dye and a porphyrin dye containing no hydroxyl group nor amino group, are prevented from change in color and color degradation even after the moisture resistance test.

Whereas, in the optical filters in Preparation Examples 7 and 17, having a copper mesh bonded to an antireflection film by means of an adhesive composition containing an anthraquinone dye containing a hydroxyl group, change in color is observed after the moisture resistance test.

In the optical filters in Preparation Examples 8 and 18, having a copper mesh bonded to an antireflection film by means of an adhesive composition containing an anthraquinone dye containing a hydroxyl group and an amino group, change in color and color degradation are observed after the moisture resistance test.

In the optical filters in Preparation Examples 9 and 19, having a copper mesh bonded to an antireflection film by means of an adhesive composition containing an acrylic adhesive having an acid value exceeding 7 mgKOH/g, change in color is observed after the moisture resistance test.

INDUSTRIAL APPLICABILITY

By use of the adhesive composition of the present invention which is prevented from change in color and color degradation after the moisture resistance test in a state where a copper mesh is bonded, an optical filter which is excellent in moisture resistance and which is prevented from change in color and color degradation can be provided. This optical filter has electromagnetic wave shielding properties and antireflection properties and is excellent also as a filter for a PDP.

The entire disclosure of Japanese Patent Application No. 2005-013717 filed on January 21, 2005 including specification, claims, drawings and summary is incorporated herein by reference in its entirety.

## Claims

1. An adhesive composition for bonding a copper mesh to an adherend, comprising an acrylic adhesive having an acid value of at most 7 mgKOH/g and a dye containing no hydroxyl group nor amino group.

2. The adhesive composition according to Claim 1, which contains, as a dye, substantially only the dye containing no hydroxyl group nor amino group.

3. The adhesive composition according to Claim 1 or 2, wherein the dye containing no hydroxyl group nor amino group

is at least one dye selected from the group consisting of an anthraquinone dye and a porphyrin dye.

**4.** The adhesive composition according to Claim 3, wherein the anthraquinone dye is a compound of the formula (1) or (2):

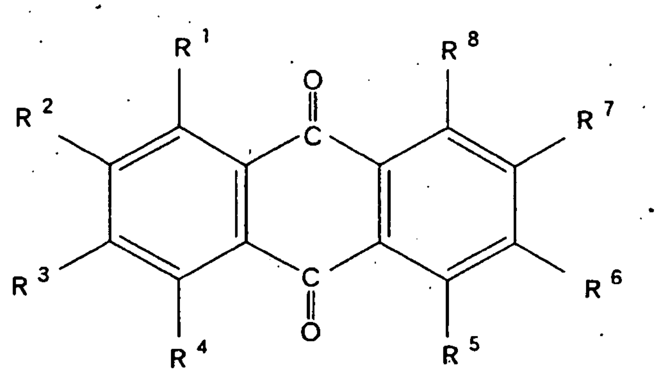

· · · (1)

wherein each of $R^1$ to $R^8$ which are independent of one another, is a hydrogen atom, a chlorine atom, a fluorine atom, a bromine atom, a cyano group, a benzyl group, a $C_{1-12}$ alkyl group (provided that the hydrogen atom in the alkyl group may be substituted by a fluorine atom or a chlorine atom), a phenyl group (provided that the hydrogen atom in the phenyl group may be substituted by a fluorine atom or a chlorine atom), a $C_{1-12}$ alkoxyl group (provided that the hydrogen atom may be substituted by a fluorine atom or a chlorine atom), -CO-$R^a$ (wherein $R^a$ is a $C_{1-8}$ alkyl group, a phenyl group, a benzyl group, a cyclohexyl group, a cyclohexylmethyl group, a 1-naphthyl group or a 2-naphthyl group), -S-$R^b$ (wherein $R^b$ is a $C_{1-8}$ alkyl group, a phenyl group, a benzyl group, a cyclohexyl group, a cyclohexylmethyl group, a 1-naphthyl group or a 2-naphthyl group), or -NH-Ph (wherein Ph is a phenyl group, and the hydrogen atom in the phenyl group may be substituted by a $C_{1-10}$ alkyl group or a $C_{1-10}$ alkoxyl group);

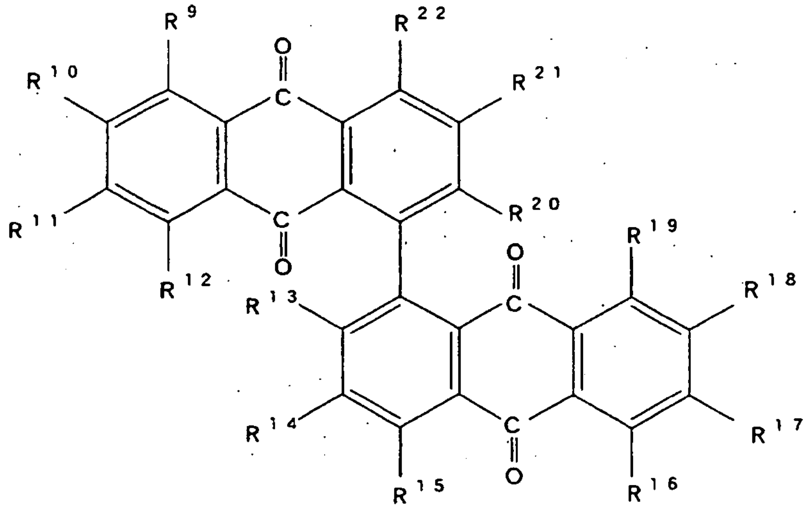

· · · (2)

wherein each of $R^9$ to $R^{22}$ which are independent of one another, is a hydrogen atom, a chlorine atom, a fluorine atom, a bromine atom, a cyano group, a benzyl group, a $C_{1-12}$ alkyl group (provided that the hydrogen atom in the alkyl group may be substituted by a fluorine atom or a chlorine atom), a phenyl group (provided that the hydrogen atom in the phenyl group may be substituted by a fluorine atom or a chlorine atom), a $C_{1-12}$ alkoxyl group (provided that the hydrogen atom in the alkoxyl group may be substituted by a fluorine atom, a bromine atom or a chlorine atom), -CO-$R^c$ (wherein $R^c$ is a $C_{1-8}$ alkyl group, a phenyl group, a benzyl group, a cyclohexyl group, a cyclohexylmethyl group, a 1-naphthyl group or a 2-naphthyl group), -S-$R^d$ (wherein $R^d$ is a $C_{1-8}$ alkyl group, a phenyl group, a benzyl group, a cyclohexyl group, a cyclohexylmethyl group, a 1-naphthyl group or a 2-naphthyl group), or -NH-Ph (wherein Ph is a phenyl group, and the hydrogen atom in the phenyl group may be substituted by a $C_{1-10}$ alkyl

group or a $C_{1-10}$ alkoxyl group).

**5.** The adhesive composition according to Claim 3, wherein the porphyrin dye is a compound of the formula (3) :

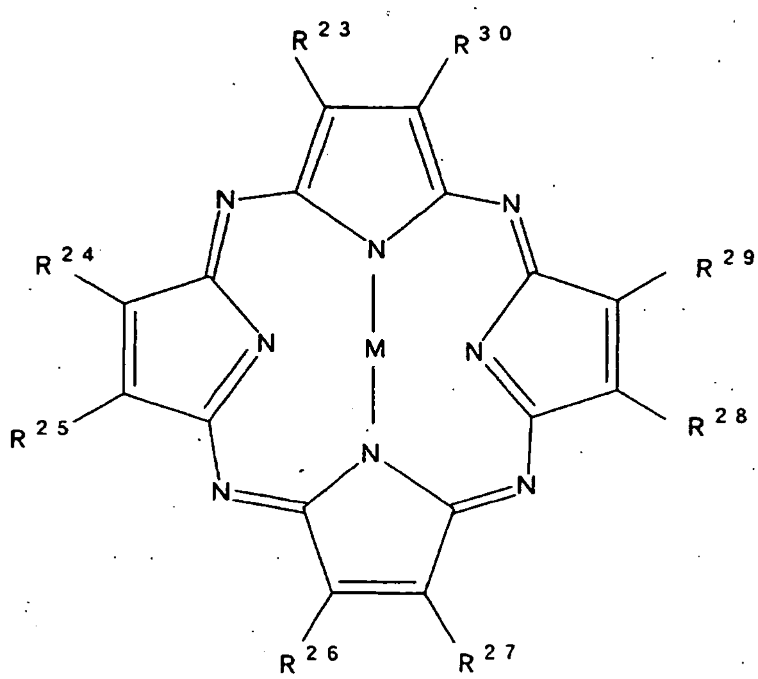

・・・(3)

wherein each of $R^{23}$ to $R^{30}$ which are independent of one another, is a hydrogen atom, a chlorine atom, a fluorine atom, a bromine atom, a cyano group, a benzyl group (provided that the hydrogen atom in the benzyl group may be substituted by a fluorine atom, a bromine atom or a chlorine atom), a phenyl group (provided that the hydrogen atom in the phenyl group may be substituted by a fluorine atom, a bromine atom or a chlorine atom), a $C_{1-10}$ alkyl group (provided that the hydrogen atom in the alkyl group may be substituted by a fluorine atom, a bromine atom or a chlorine atom), or a $C_{1-10}$ alkoxyl group (provided that the hydrogen atom in the alkoxyl group may be substituted by a fluorine atom or a chlorine atom), and M is Cu, Ni, Zn, Pd, Pt, VO, Co or Mg.

**6.** The adhesive composition according to any one of Claims 1 to 5, wherein the acrylic adhesive having an acid value of at most 7 mgKOH/g, is an adhesive containing (meth)acrylic acid or its alkyl ester as the main component.

**7.** An optical filter having a copper mesh bonded to an adherend by means of the adhesive composition as defined in any one of Claims 1 to 6.

**8.** The optical filter according to Claim 7, wherein the adherend is an antireflection film.

**9.** The optical filter according to Claim 7, wherein the adherend is a resin film.

**Patentansprüche**

**1.** Haftmittelzusammensetzung zum Verbinden eines Kupfernetzes an eine Haftfläche, umfassend ein Acrylhaftmittel mit einem Säurewert von höchstens 7 mg KOH/g und einen Farbstoff, der weder eine Hydroxylgruppe noch eine Aminogruppe enthält.

**2.** Haftmittelzusammensetzung gemäß Anspruch 1, welche als einen Farbstoff im wesentlichen nur den Farbstoff, enthaltend weder eine Hydroxylgruppe noch eine Aminogruppe, enthält.

**3.** Haftmittelzusammensetzung gemäß Anspruch 1 oder 2, wobei der Farbstoff, der weder eine Hydroxylgruppe noch eine Aminogruppe enthält, mindestens ein Farbstoff, ausgewählt aus der Gruppe, bestehend aus einem Anthrachinonfarbstoff und einem Porphyrinfarbstoff, ist.

4. Haftmittelzusammensetzung gemäß Anspruch 3, wobei der Anthrachinonfarbstoff eine Verbindung der Formel (1) oder (2) ist:

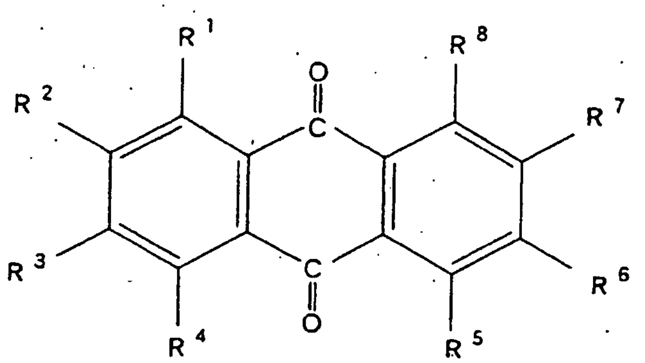

· · · (1)

wobei $R^1$ bis $R^8$, welche unabhängig voneinander sind, jeweils ein Wasserstoffatom, ein Chloratom, ein Fluoratom, ein Bromatom, eine Cyanogruppe, eine Benzylgruppe, eine $C_{1-12}$-Alkylgruppe (mit der Maßgabe, daß das Wasserstoffatom in der Alkylgruppe durch ein Fluoratom oder ein Chloratom substituiert sein kann), eine Phenylgruppe (mit der Maßgabe, daß das Wasserstoffatom in der Phenylgruppe durch ein Fluoratom oder ein Chloratom substituiert sein kann), eine $C_{1-12}$-Alkoxygruppe (mit der Maßgabe, daß das Wasserstoffatom durch ein Fluoratom oder ein Chloratom substituiert sein kann), -CO-$R^a$ (wobei $R^a$ eine $C_{1-8}$-Alkylgruppe, eine Phenylgruppe, eine Benzylgruppe, eine Cyclohexylgruppe, eine Cyclohexylmethylgruppe, eine 1-Naphthylgruppe oder eine 2-Naphthylgruppe), -S-$R^b$ (wobei $R^b$ eine $C_{1-8}$-Alkylgruppe, eine Phenylgruppe, eine Benzylgruppe, eine Cyclohexylgruppe, eine Cyclohexylmethylgruppe, eine 1-Naphthylgruppe oder eine 2-Naphthylgruppe ist) oder -NH-Ph (wobei Ph eine Phenylgruppe ist, und das Wasserstoffatom in der Phenylgruppe durch eine $C_{1-10}$-Alkylgruppe oder eine $C_{1-10}$-Alkoxylgruppe substituiert sein kann),

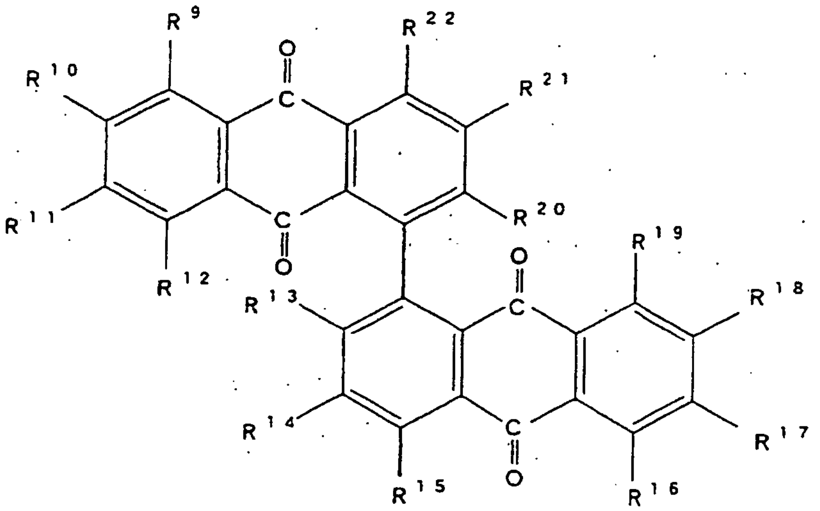

· · · (2)

wobei $R^9$ bis $R^{22}$, welche voneinander unabhängig sind, jeweils ein Wasserstoffatom, ein Chloratom, ein Fluoratom, ein Bromatom, eine Cyangruppe, eine Benzylgruppe, eine $C_{1-12}$-Alkylgruppe (mit der Maßgabe, daß das Wasserstoffatom in der Alkylgruppe durch ein Fluoratom oder ein Chloratom substituiert sein kann), eine Phenylgruppe (mit der Maßgabe, daß das Wasserstoffatom in der Phenylgruppe durch ein Fluoratom oder ein Chloratom substituiert sein kann), eine $C_{1-12}$-Alkoxygruppe (mit der Maßgabe, daß das Wasserstoffatom in der Alkoxygruppe durch ein Fluoratom, ein Bromatom oder ein Chloratom substituiert sein kann); -CO-$R^c$ (wobei $R^c$ eine $C_{1-8}$-Alkylgruppe, eine

Phenylgruppe, eine Benzylgruppe, eine Cyclohexylgruppe, eine Cyclohexylmethylgruppe, eine 1-Naphthylgruppe oder eine 2-Naphthylgruppe ist), -S-$R^d$ (wobei $R^d$ eine $C_{1-8}$-Alkylgruppe, eine Phenylgruppe, eine Benzylgruppe, eine Cyclohexylgruppe, eine Cyclohexylmethylgruppe, eine 1-Naphthylgruppe oder eine 2-Naphthylgruppe ist) oder -NH-Ph (wobei Ph eine Phenylgruppe ist, und das Wasserstoffatom in der Phenylgruppe durch eine $C_{1-10}$-Alkylgruppe oder eine $C_{1-10}$-Alkoxygruppe substituiert sein kann) sind.

5. Haftmittelzusammensetzung gemäß Anspruch 3, wobei der Porphyrinfarbstoff eine Verbindung der Formel (3) ist:

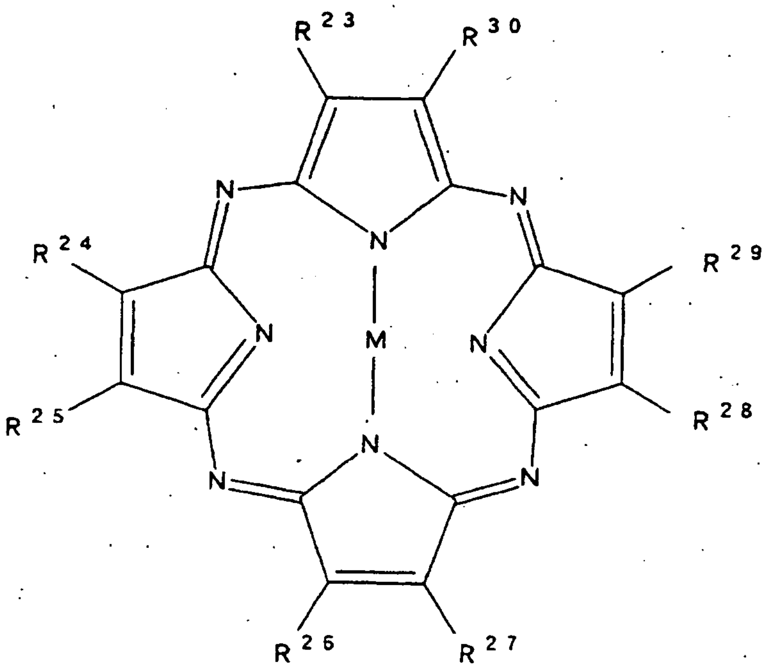

· · · (3)

wobei $R^{23}$ bis $R^{30}$, welche voneinander unabhängig sind, jeweils ein Wasserstoffatom, ein Chloratom, ein Fluoratom, ein Bromatom, eine Cyanogruppe, eine Benzylgruppe (mit der Maßgabe, daß das Wasserstoffatom in der Benzylgruppe durch ein Fluoratom, ein Bromatom oder ein Chloratom substituiert sein kann), eine Phenylgruppe (mit der Maßgabe, daß das Wasserstoffatom in der Phenylgruppe durch ein Fluoratom, ein Bromatom oder ein Chloratom substituiert sein kann), eine $C_{1-10}$-Alkylgruppe (mit der Maßgabe, daß das Wasserstoffatom in der Alkylgruppe durch ein Fluoratom, ein Bromatom oder ein Chloratom substituiert sein kann) oder eine $C_{1-10}$-Alkoxygruppe (mit der Maßgabe, daß das Wasserstoffatom in der Alkoxygruppe durch ein Fluoratom oder ein Chloratom substituiert sein kann) sind, und M Cu, Ni, Zn, Pd, Pt, VO, Co oder Mg ist.

6. Haftmittelzusammensetzung gemäß einem der Ansprüche 1 bis 5, wobei das Acrylhaftmittel, welches einen Säurewert von höchstens 7 mgKOH/g aufweist, ein Haftmittel, enthaltend (Meth)acrylsäure oder dessen Alkylester als die Hauptkomponente, ist.

7. Optischer Filter mit einem Kupfernetz, gebunden an eine Haftfläche mittels der Haftmittelzusammensetzung, wie in einem der Ansprüche 1 bis 6 definiert.

8. Optischer Filter gemäß Anspruch 7, wobei die Haftfläche eine Antireflexfolie ist.

9. Optischer Filter gemäß Anspruch 7, wobei die Haftfläche eine Harzfolie ist.

## Revendications

1. Composition adhésive pour lier une grille en cuivre à un substrat de support, comprenant un adhésif acrylique ayant un indice d’acide d’au plus 7 mg KOH/g et un colorant ne contenant ni groupe hydroxyle ni groupe amino.

2. Composition adhésive selon la revendication 1, qui contient, en tant que colorant, pratiquement seulement le colorant ne contenant ni groupe hydroxyle ni groupe amino.

3. Composition adhésive selon la revendication 1 ou 2, dans laquelle le colorant ne contenant ni groupe hydroxyle ni groupe amino est au moins un colorant choisi dans l'ensemble constitué par un colorant anthraquinonique et un colorant porphyrinique.

4. Composition adhésive selon la revendication 3, dans laquelle le colorant anthraquinonique est un composé de formule (1) ou (2) :

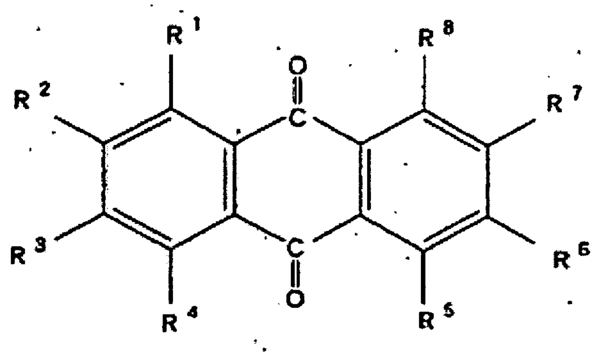

dans laquelle chacun de $R^1$ à $R^8$, qui sont mutuellement indépendants, est un atome d'hydrogène, un atome de chlore, un atome de fluor, un atome de brome, un groupe cyano, un groupe benzyle, un groupe alkyle en $C_1$ à $C_{12}$ (avec la réserve que l'atome d'hydrogène dans le groupe alkyle peut être remplacé par un atome de fluor ou un atome de chlore), un groupe phényle (avec la réserve que l'atome d'hydrogène dans le groupe phényle peut être remplacé par un atome de fluor ou un atome de chlore), un groupe alcoxy en $C_1$ à $C_{12}$ (avec la réserve que l'atome d'hydrogène peut être remplacé par un atome de fluor ou un atome de chlore), -CO-$R^a$ (où $R^a$ est un groupe alkyle en $C_1$ à $C_8$, un groupe phényle, un groupe benzyle, un groupe cyclohexyle, un groupe cyclohexylméthyle, un groupe 1-naphtyle ou un groupe 2-naphtyle), -S-$R^b$ (où $R^b$ est un groupe alkyle en $C_1$ à $C_8$, un groupe phényle, un groupe benzyle, un groupe cyclohexyle, un groupe cyclohexylméthyle, un groupe 1-naphtyle ou un groupe 2-naphtyle), ou -NH-Ph (où Ph est un groupe phényle, et l'atome d'hydrogène dans le groupe phényle pouvant être remplacé par un groupe alkyle en $C_1$ à $C_{10}$ ou un groupe alcoxy en $C_1$ à $C_{10}$) ;

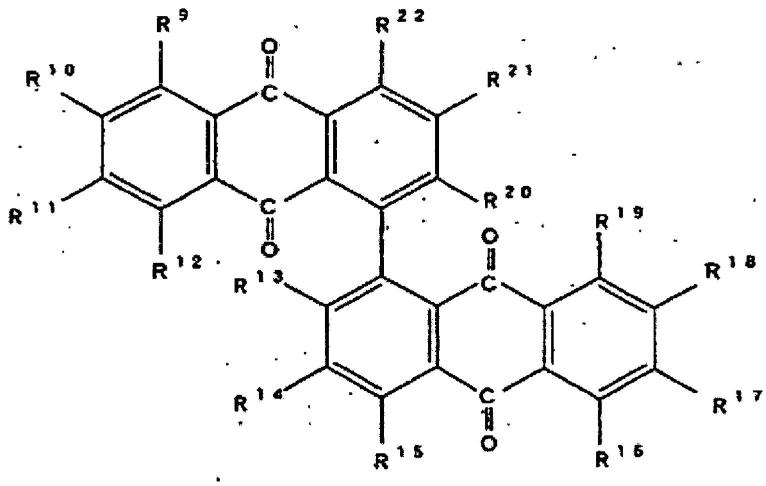

(2)

dans laquelle chacun de $R^9$ à $R^{22}$, qui sont mutuellement indépendants, est un atome d'hydrogène, un atome de chlore, un atome de fluor, un atome de brome, un groupe cyano, un groupe benzyle, un groupe alkyle en $C_1$ à $C_{12}$ (avec la réserve que l'atome d'hydrogène dans le groupe alkyle peut être remplacé par un atome de fluor ou un

atome de chlore), un groupe phényle (avec la réserve que l'atome d'hydrogène dans le groupe phényle peut être remplacé par un atome de fluor ou un atome de chlore), un groupe alcoxy en $C_1$ à $C_{12}$ (avec la réserve que l'atome d'hydrogène dans le groupe alcoxy peut être remplacé par un atome de fluor, un atome de brome ou un atome de chlore), -CO-$R^c$ (où $R^c$ est un groupe alkyle en $C_1$ à $C_8$, un groupe phényle, un groupe benzyle, un groupe cyclohexyle, un groupe cyclohexylméthyle, un groupe 1-naphtyle ou un groupe 2-naphtyle), -S-$R^d$ (où $R^d$ est un groupe alkyle en $C_1$ à $C_8$, un groupe phényle, un groupe benzyle, un groupe cyclohexyle, un groupe cyclohexylméthyle, un groupe 1-naphtyle ou un groupe 2-naphtyle), ou -NH-Ph (où Ph est un groupe phényle, et l'atome d'hydrogène dans le groupe phényle pouvant être remplacé par un groupe alkyle en $C_1$ à $C_{10}$ ou un groupe alcoxy en $C_1$ à $C_{10}$).

**5.** Composition adhésive selon la revendication 3, dans laquelle le colorant porphyrinique est un composé de formule (3) :

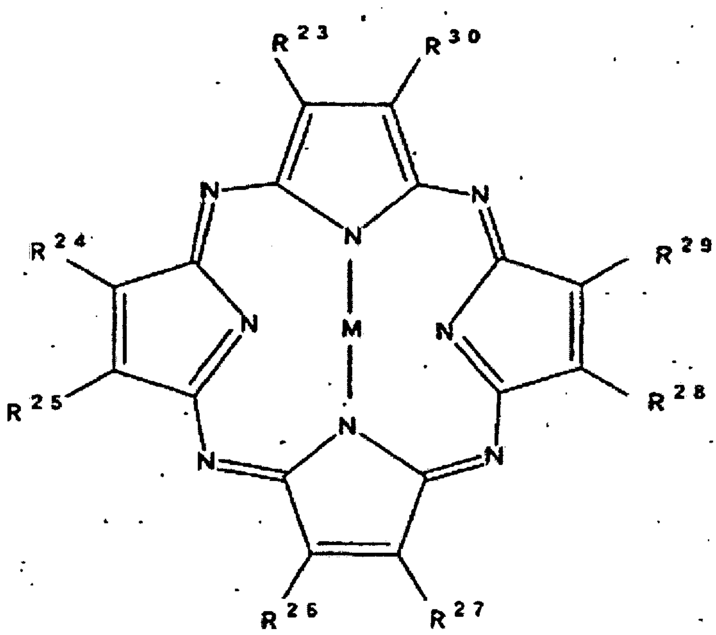

(3)

dans laquelle chacun de $R^{23}$ à $R^{30}$, qui sont mutuellement indépendants, est un atome d'hydrogène, un atome de chlore, un atome de fluor, un atome de brome, un groupe cyano, un groupe benzyle (avec la réserve que l'atome d'hydrogène dans le groupe benzyle peut être remplacé par un atome de fluor, un atome de brome ou un atome de chlore), un groupe phényle (avec la réserve que l'atome d'hydrogène dans le groupe phényle peut être remplacé par un atome de fluor, un atome de brome ou un atome de chlore), un groupe alkyle en $C_1$ à $C_{10}$ (avec la réserve que l'atome d'hydrogène dans le groupe alkyle peut être remplacé par un atome de fluor, un atome de brome ou un atome de chlore), ou un groupe alcoxy en $C_1$ à $C_{10}$ (avec la réserve que l'atome d'hydrogène dans le groupe alcoxy peut être remplacé par un atome de fluor ou un atome de chlore), et M est Cu, Ni, Zn, Pd, Pt, VO, Co ou Mg.

**6.** Composition adhésive selon l'une quelconque des revendications 1 à 5, dans laquelle l'adhésif acrylique ayant un indice d'acide d'au plus 7 mg KOH/g est un adhésif contenant, à titre de composant principal, de l'acide (méth) acrylique ou un ester alkylique de celui-ci.

**7.** Filtre optique ayant une grille en cuivre liée à un substrat de support au moyen de la composition adhésive telle que définie dans l'une quelconque des revendications 1 à 6.

**8.** Filtre optique selon la revendication 7, dans lequel le substrat de support est un film antireflet.

**9.** Filtre optique selon la revendication 7, dans lequel le substrat de support est un film de résine.

Fig. 1

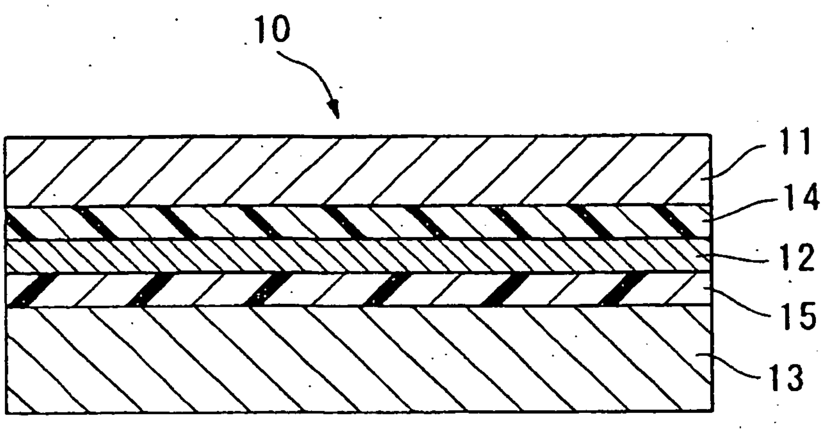

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003283182 A
- JP 2005013717 A